# EUROPEAN PATENT APPLICATION

(11) **EP 2 218 758 A1**
(43) Date of publication of application: **18.08.2010**
(21) Application number: 09169957.9
(22) Date of filing: 10.09.2009
(51) Int. Cl.: C09J 7/02, G09F 3/02

(54) **Tamper-proof adhesive tape assembly**

(30) Priority: 11.02.2009 TW 98201927 U
(71) Applicant: Seal King Industrial Co. Ltd, Taiwan (CN)
(72) Inventor: Wu, Chia-Lu, 326, Taoyuan County (TW)
(74) Representative: Skone James, Robert Edmund

(57) **Abstract**

Provided is a tamper-proof adhesive tape assembly, including: a tape strip carrier (120) with a hollow core (122); a plurality of tamper-proof adhesive strips (110) arranged in stack around the tape strip carrier, each including a substrate (112) having opposing first and second surfaces (112a,112b), an adherent portion (114) and a tearing portion (116) formed on the second surface of the substrate, wherein each tamper-proof adhesive strip (110) in stack is applied on one another in fully-overlapping fashion by the second surface (112b) of the substrate facing toward the tape strip carrier; and a retaining element (130) for securing in position the tamper-proof adhesive strips. The tamper-proof adhesive tape assembly is capable of package sealing and identification, convenient to use, reusable, and environment-friendly.

## Description

### Field of the Invention

The present invention relates to an adhesive tape assembly, and, more particularly, to a tamper-proof adhesive tape assembly capable of identifying the sealed state of an object to which the tape is affixed.

### Description of Prior Art

With increasing demand for packaging security, a variety of security means having tamper-proof characteristics in various forms have been widely applied, such as tamper-proof papers, films and adhesive tapes, to seal up various kinds of envelops (for example, in courier delivery services or law enforcement), packages (for example, in e-commerce or controlled drugs), drawer, safes (for example, in law enforcement) containing important documents or valuable articles, or towed vehicles.

The prior art tamper-proof adhesive tape assembly basically contains a coating layer having tamper-proof symbols coated on the backside of the substrate thereof and a thin adhesive coated over the coating layer. The coating layer having tamper-proof symbols formed thereon is typically made of a material different from other coating materials such that the adhesion between the coating layer and the adhesive layer is stronger than the adhesion between the coating layer and the substrate, and thus after the substrate of the tape is torn off from an object, the tamper-proof symbol markings on the coating layer remain on the object for identification of the sealed state of the object. However, after the substrate is removed from the adhesive tape, the integrity of the seal is lost and cannot be reapplied or resealed for protection.

To address this issue, Taiwan Patent Publication No. 433279, which is owned by the applicant of the present invention, discloses an adhesive tape having an adhesive letter-printed layer printed on the backside of the substrate and a color-fixed layer coated on the letter-printed layer with the substrate free of the letter-printed layer, wherein an adhesive layer is formed on the color-fixed layer, such that the adhesive tape can be affixed to an object to be sealed with tamper-detection features for protection and identification. However, the initial user must pay careful attention while tearing the tape off from a roll to apply to the sealed object to avoid having part of the letter-printed layer and/or the color fixed layer remain attached to the roll, which causes inconvenience in usage and also cause difficulty identifying the sealed state of the object.

Moreover, in that the conventional roll-type adhesive tape requires the use of scissors or knives to cut the tape to the desired length for use, it is not effective or convenient to use when there are numerous packages that need to be sealed quickly. Although adhesive tapes having cutting marks formed thereon are available on the market, the user still needs to pay careful attention to avoid damaging the adhesive tape while applying it. Also, the user has to prepare and store rolls of adhesive tapes having different types, sizes or color marks in order to suit different purposes, which undesirably takes up storage space and causes inconvenience in usage.

As such, it is desirable to provide an improved tamper-proof sealing tape that is easy and convenient to use yet without compromising the effect of identification.

### SUMMARY OF THE INVENTION

In light of the drawbacks associated with the conventional techniques as described above, a primary objective of the present invention is to provide a tamper-proof adhesive tape assembly that provides ease and convenience in usage and also can be repetitively used to avoid waste that is bad for the environment.

Another objective of the present invention is to provide a tamper-proof adhesive tape assembly that can clearly identify the sealed integrity of a sealed package.

In accordance with the foregoing and other objectives, the tamper-proof adhesive tape assembly proposed by the present invention comprises a tape strip carrier with a hollow core; a plurality of tamper-proof adhesive strips arranged in stack around the tape strip carrier, each of the plurality of tamper-proof adhesive strips comprising a substrate having opposing first and second surfaces, allowing an adherent portion and a tearing portion to be formed on the second surface of the substrate, wherein the strips are applied on one another in a fully overlapping parallel fashion by the second surface of the substrate facing toward the tape strip carrier; and a retaining element for securing in position the stacked tamper-proof adhesive strips. The adherent portion of a tamper-proof adhesive strip consists of a first identification layer partially formed on the substrate and having a first color, a second identification layer formed on an area of the substrate free from the first identification layer and having a first color, the another partial surface not being corresponding in position to the first identification layer, a viscous layer formed over first and second identification layers and having a second color, and an adhesive layer formed on the viscous layer with its exposed (lower) surface facing outward in the opposite direction of the exposed (top) surface of the substrate.

In the tamper-proof adhesive tape assembly of the present invention, the retaining element is formed by a first ring-shaped retaining member and a second ring-shaped retaining member, and the first and second ring-shaped retaining members each comprising an insert portion for deep insertion into the hollow core of the tape strip carrier and a ring-shaped groove for accommodating a partial surface of the tamper-proof adhesive strips applied on the tape strip carrier; wherein the radius of the insert portion of the first ring-shaped retaining member is less than the radius of the insert portion of the second ring-shaped retaining member, such that the insert portion of the first ring-shaped retaining member can be inserted into and accommodated in the insert portion of the second ring-shaped retaining member, and wherein depth of insertion of the first ring-shaped retaining member into the second ring-shaped retaining member is adjustable according to width of the tape strip carrier so as for a partial surface of the tamper-proof adhesive strips arranged in stack around the tape strip carrier to be accommodated in the ring-shaped groove.

The adhesive tape assembly of the invention further comprises a base. The base is provided with an accommodating area for receiving the tape strip carrier and the retaining element thereon, and an adjusting mechanism for the purpose of fastening the tape strip carrier and the retaining element onto the accommodating area of the base.

The tamper-proof adhesive tape assembly proposed by the present invention is **characterized in that** it not only indicates the sealed state of packages but also provides convenience in usage. Moreover, it is environmentally friendly in that the tape strip carrier remaining after the tamper-proof adhesive strips have been exhausted can be refilled for further usage. Furthermore, the differentiating colors used in first and second identification layers facilitate identification of the sealed state of a package and thus has high applicability.

### BRIEF DESCRIPTION OF THE DRAWINGS

FIGs. 1a, 1b are perspective and exploded views illustrating a first preferred embodiment of the tamper-proof adhesive tape assembly according to the present invention;
FIG.s. 2a, 2b, 2c are cross-sectional views illustrating the tamper-proof adhesive tape assembly according to the present invention;
FIGs. 3a and 3b are top views illustrating the tamper-proof adhesive tape assembly according to the present invention;
FIGs. 4a, 4b are perspective views illustrating a second preferred embodiment of the tamper-proof adhesive tape assembly according to the present invention; and
FIG. 5 is a perspective view illustrating a third preferred embodiment of the tamper-proof adhesive tape assembly according to the present invention.

### DETAILED DESCRIPTION OF THE PRESENT EMBODIMENTS

The present invention is described in the following so that one skilled in the pertinent art can readily understand other advantages and effects of the present invention. The present invention may also be implemented and applied according to other embodiments, and the details may be modified based on different views and applications without departing from the spirit of the invention.

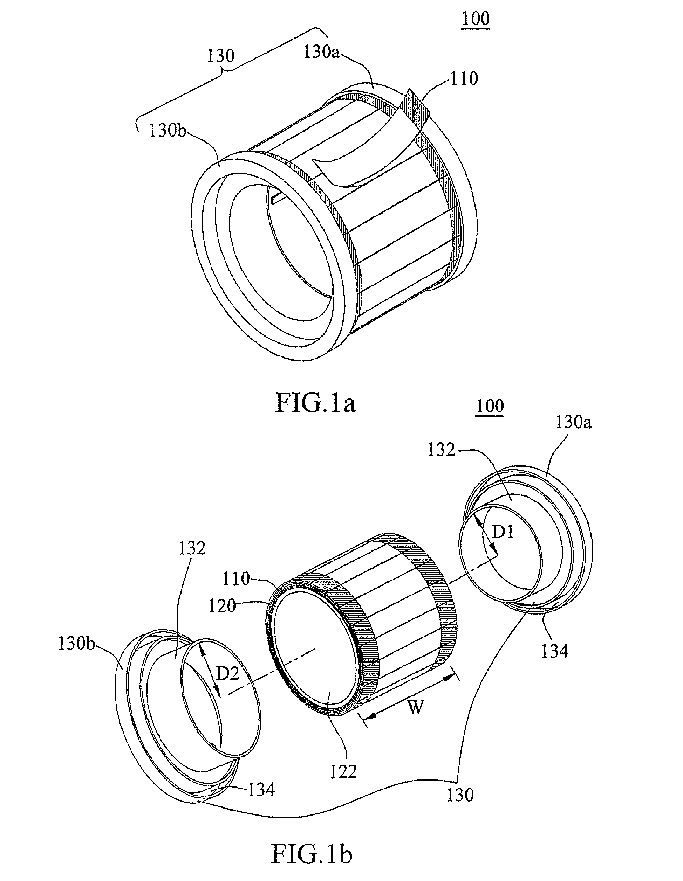

FIGs. 1a, 1b are perspective and exploded views illustrating the first embodiment of the tamper-proof adhesive tape assembly according to the present invention. As shown, the tamper-proof adhesive tape assembly 100 comprises a plurality of tamper-proof adhesive strips 110; a cylindrical tape strip carrier 120 having a hollow core 122 for supporting the tamper-proof adhesive strips 110 thereon arranged in stack around the tape strip carrier; and a retaining element 130 comprising first and second ring-shaped retaining members 130a, 130b for retaining and securing in position the stacked tamper-proof adhesive strips 110.

As depicted in FIG. 1b, each of the first and second ring-shaped retaining members 130a, 130b has an insert portion 132 for deep insertion into the hollow core 122 of the cylindrical tape strip carrier 120, and has a ring-shaped groove 134 for accommodating a partial surface of the tamper-proof adhesive strips 110 supported on the tape strip carrier 120. Radius D1 of the insert portion 132 of the first ring-shaped retaining member 130a is less than radius D2 of the insert portion 132 of the second ring-shaped retaining member 130b, such that the insert portion 132 of the first ring-shaped retaining member 130a can be inserted into and accommodated in the insert portion 132 of the second ring-shaped retaining member 130b. Depth of insertion of the first ring-shaped retaining member 130a into the second ring-shaped retaining member 130b is adjustable according to width of the tape strip carrier 120 so as for a partial surface of the tamper-proof adhesive strips 110 arranged in stack around the tape strip carrier 120 to be accommodated in the ring-shaped groove 134.

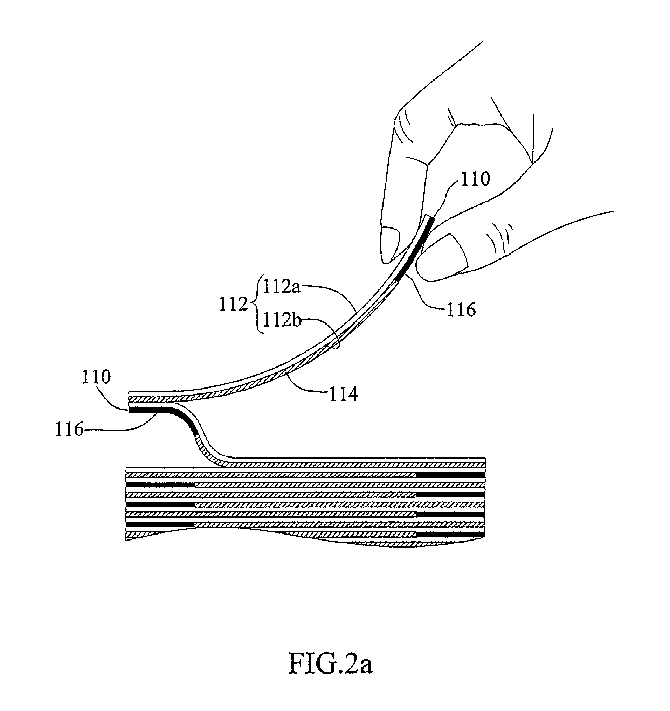

As shown in FIG 2a, each of the tamper-proof adhesive strips 110 in the tamper-proof adhesive tape assembly 100 comprises a substrate 112 having first and second surfaces 112a, 112b, an adherent portion 114, and a tearing portion 116 formed on one end of the second surface 112b of the substrate 112. In the tamper-proof adhesive tape assembly 100, the tamper-proof adhesive strips 110 are applied on the tape strip carrier 120 in a fully overlapping parallel fashion by using the second surface 112b of the substrate 112 to face toward the tape strip carrier 120. In one embodiment, the tamper-proof adhesive strips 110 each are alternately stacked up on the tape strip carrier 120 in a manner such that an end portion of the lower (non-substrate-facing) surface of each adherent portion 114 is affixed to the first (upper) surface 112a of the substrate 112 of the underlying tamper-proof adhesive strip 110 at an end situated above the tearing portion 116.

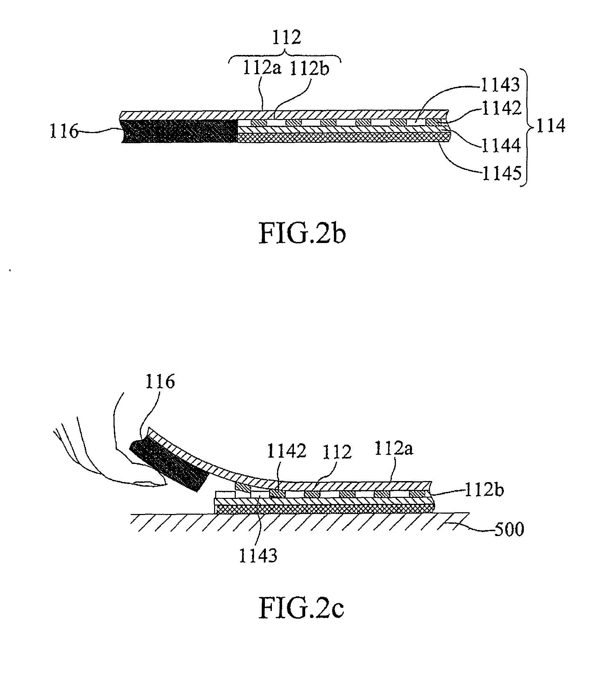

FIGs. 2b and 2c illustrate cross-sectional views of the tamper-proof adhesive strips 110, with particular detail given to the adherent portion 114. As depicted in FIG. 2b, the adherent portion 114 of a tamper-proof adhesive strip 110 consists of a first identification layer 1142 partially formed on the second surface 112b of the substrate 112 and having a first color, a second identification layer 1143 formed on an area of the second surface 112b of the substrate 112 free from the first identification layer 1142 and having a first color, a viscous layer 1144 formed over both the first and second identification layers 1142, 1143 such that it is not in contact with the substrate 112 and having a second color, and an adhesive layer 1145 formed on the viscous layer 1144.

In one embodiment, the substrate 112 of the tamper-proof adhesive strips 110 is transparent, plastic, and thin, wherein the first identification layer 1142 has tearing marks formed thereon in the adherent portion 114 thereof containing arbitrary words, such as OPENED or USED, to identify the state of a sealed package. The first and second colors described above are complementary to each other for ease of identification, and the first and second identification layers 1142, 1143 are disposed to have one on top of another or overlapped to form a third color for enhancing the tamper-proof display function. Since the structure and material characteristics of the substrate 112 are well-known and not crucial features of the present invention, they are not further described herein.

In one embodiment, the viscous layer 1144 comprises a viscous film, and an adhesive is coated on the viscous layer 1144 at surfaces away from the substrate 112 to form an adhesive layer 1145. In one embodiment of the adherent portion 114 of the adhesive tape assembly 100, the adhesion between the first and second identification layers 1142, 1143 is less than the adhesion of the substrate 112 to the first identification layer 1142 (such that the first adhesion layer 1142 can remain attached to the substrate 112 while being pulled away from the rest of the adherent layer 1144) and is also less than the adhesion of the viscose layer 1144 to the second identification layer 1143 (such that the second identification layer will remain behind). Further, the first identification layer 1142 has less adhesion to the viscous layer 1144 than to the substrate 112, and the second identification layer 1143 has more adhesion to the viscose layer 1144 than to the substrate 112. Further, the adhesion of the second identification layer 1143 to the viscose layer 1144 is less than the adhesion of the viscose layer 1144 to the adhesive layer 1145 and is also less than the adhesion of the adhesive layer 1145 to the sealed package 500. As a result, as shown in FIG 2c, when a tamper-proof adhesive strip 110 is removed from a sealed package 500 via its tearing portion 116, the first identification layer 1142 (along with its underlying substrate 112) is separated from the second identification layer 1143, the viscous layer 1144, the adhesive layer 1145, and the sealed object 500 (though there was not direct contact with the sealed object), whereas the second identification layer 1143 still remains on the viscous layer 1144. After the adhesive tape is affixed to an object to be sealed, even if the substrate 112 has been torn off, the object still remains secured in position by the viscous layer 1144, and the separation of the first and second identification layers 1142, 1143 from the viscous layer 1144 results in an identification mark for observation of the integrity of the sealed object.

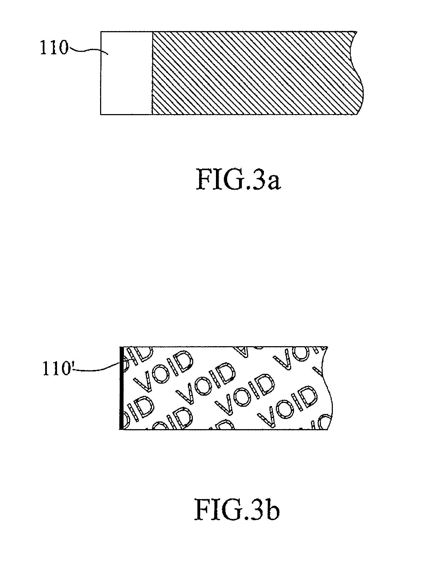

FIGs. 3a and 3b respectively show top views of the tamper-proof adhesive tape 110 affixed to an object being sealed and torn off therefrom. As shown in FIG 3a, when a tamper-proof adhesive strip 110 is affixed to an object to be sealed, the first and second identification layers 1142, 1143 coated over the viscous layer 1144 are still attached such that a third color (such as green) produced by the mixture of a first color (such as yellow) and a second color (such as blue) is shown by the substrate thereof. After the tamper-proof adhesive strip 110 has been removed from the sealed object, as shown in FIG 2c and 3b, the first identification layer 1142 and the substrate 112 are removed along with the adhesive tape 110 from the sealed object, leaving only the second identification layer 1143 having a first color (such as yellow) on the viscous layer 1144. Viewing from a top angle, the adhesive tape 110' shows a second color (such as blue) of the viscous layer 1144 and a third color (such as green) mixed by the second identification layer 1143 and the viscous layer 1144, thereby providing a contrast color for ease of identification while maintaining the sealed state of the tape.

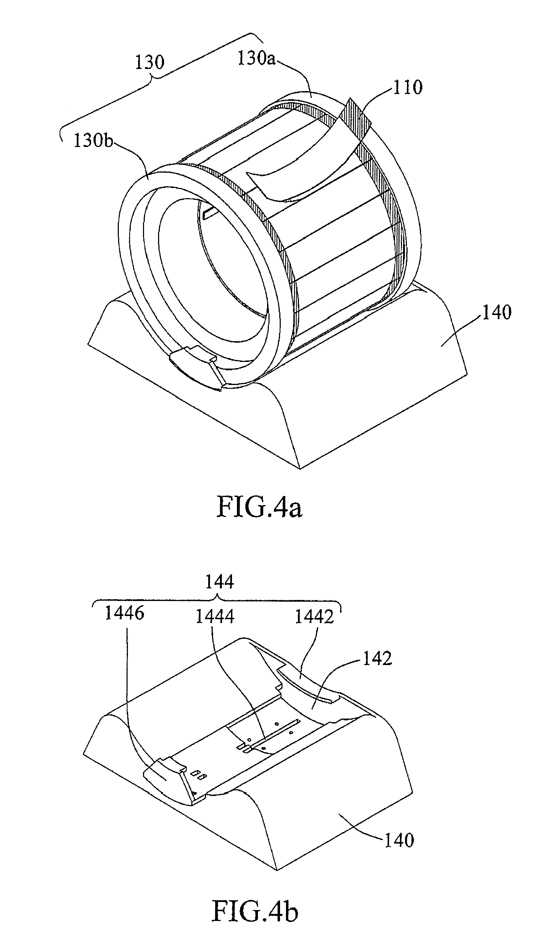

FIGs. 4a, 4b show a second preferred embodiment of the tamper-proof adhesive tape assembly according to the present invention. In this embodiment, the tamper-proof adhesive tape assembly includes a plurality of tamper-proof adhesive strips 110, a tape strip carrier 120 with a hollow core 122 (see FIG 1b), a retaining element 130 consisting of first and second ring-shaped retaining members 130a, 130b, and a base 140. As shown in FIG 4b, the base 140 comprises an accommodating area 142 for the tape strip carrier 120 having stacked adhesive strips 110 and the retaining element 130 to be disposed thereon, and an adjusting mechanism 144 for adjusting the range of the accommodating area 142 according to the width of the tape strip carrier 120. The adjusting mechanism 144 is provided with a fixed end 1442 attached to an end of the accommodating area 142, a sliding track 1444 formed in the accommodating area 142, and an adjusting end 1446. The distance between the adjusting end 1446 and the fixed end 1442 is adjustable according to the width of the tape strip carrier 120 by the sliding track 1444, so as to determine the width of the accommodating area 142, thereby securing in position the tape strip carrier 120 having adhesive tapes 110 stacked thereon and the retaining element 130 onto the base 140.

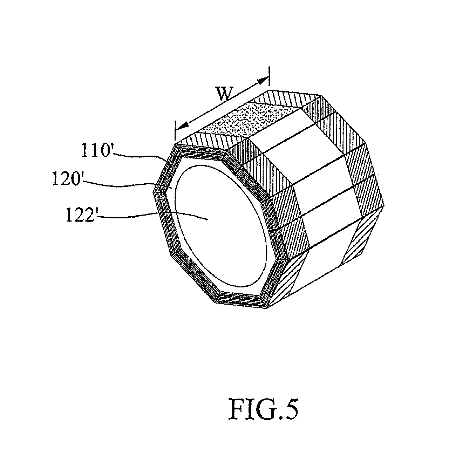

FIG. 5 illustrates the third embodiment of the present invention characterized by employing a tape strip carrier 120' with a polygonal-shaped support member having a round hollow core 122', which is applicable to use of tamper-proof adhesive tapes 110' of different sizes, and potentially different colors or indicator symbols.

While illustrative embodiments are provided in the above description, such are for illustration of the principles and functions of the present invention and are not to be construed restrictively. Various modifications and variations of the present invention will be obvious to those skilled in the art and are to be covered by the following claims.

## Claims

1. A tamper-proof adhesive tape assembly, comprising:
a tape strip carrier with a hollow core;
a plurality of tamper-proof adhesive strips arranged in stack around the tape strip carrier, each of the plurality of tamper-proof adhesive strips comprising a substrate having opposing first and second surfaces, allowing an adherent portion and a tearing portion to be formed on the second surface of the substrate, wherein the tamper-proof adhesive strips in stack are stacked on one another in fully-overlapping fashion by the second surface of the substrate facing toward the tape strip carrier; and
a retaining element for securing in position the stacked tamper-proof adhesive strips;
wherein the adherent portion of a tamper-proof adhesive strip consists of a first identification layer partially formed on the substrate and having a first color, a second identification layer formed on an area of the substrate free from the first identification layer and having the first color, the another partial surface not being corresponding in position to the first identification layer, a viscous layer formed over the first and second identification layers and having a second color, and an adhesive layer formed on the viscous layer.

2. The tamper-proof adhesive tape assembly of claim 1, wherein adhesion of the first identification layer to the second identification layer is less than that of the substrate to the first identification layer, and also is less than that of the viscous layer to the second identification layer.

3. The tamper-proof adhesive tape assembly of claim 1, wherein the first identification layer has less adhesion to the viscous layer than to the substrate, and the second identification layer has more adhesion to the viscous layer than to the substrate.

4. The tamper-proof adhesive tape assembly of any of the preceding claims, wherein the first identification layer has tearing marks formed thereon for identification.

5. The tamper-proof adhesive tape assembly of any of the preceding claims, wherein the first and second colors are complementary colors.

6. The tamper-proof adhesive tape assembly of any of the preceding claims, wherein the substrate is a transparent, plastic, and thin.

7. The tamper-proof adhesive tape assembly of any of the preceding claims, wherein the viscous layer is a viscous film.

8. The tamper-proof adhesive tape assembly of any of the preceding claims, wherein the adhesive layer is formed by coating a layer of adhesive glue on the viscous layer.

9. The tamper-proof adhesive tape assembly of any of the preceding claims, wherein the plurality of tamper-proof adhesive strips each are alternately stacked up on the tape strip carrier in a manner such that an end portion of the lower (non-substrate-facing) surface of each adherent portion is affixed to the first (upper) surface of the substrate of the underlying tamper-proof adhesive strip at an end situated above the tearing portion.

10. The tamper-proof adhesive tape assembly of any of the preceding claims, wherein the tape strip carrier is a cylindrical hollow-shaped support member.

11. The tamper-proof adhesive tape assembly of any of the preceding claims, wherein the retaining element is formed by a first ring-shaped retaining member and a second ring-shaped retaining member, the first and second ring-shaped retaining members each comprising an insert portion penetrating into the hollow-shaped tape strip carrier and a ring-shaped groove for accommodating a partial surface of the tamper-proof adhesive strips stacked up on and around the tape strip carrier; wherein a radius of the insert portion of the first ring-shaped retaining member is less than that of the insert portion of the second ring-shaped retaining member, such that the insertion portion of the first ring-shaped retaining member can be inserted into and accommodated in the insertion portion of the second ring-shaped retaining member, and wherein depth of insertion of the first ring-shaped retaining member into the second ring-shaped retaining member is adjustable according to width of the tape strip carrier so as for a partial surface of the tamper-proof adhesive strips arranged in stack around the tape strip carrier to be accommodated in the ring-shaped grooves.

12. The tamper-proof adhesive tape assembly of any of the preceding claims, further comprising a base having an accommodating area and an adjusting mechanism,
wherein the adjusting mechanism adjusts a range of the accommodating area according to a width of the tape strip carrier, thereby allowing the tape strip carrier having adhesive tapes stacked up on and around thereon and the retaining element to be secured in position to the accommodating area of the base.
